# EUROPÄISCHE PATENTSCHRIFT

(11) **EP 0 937 875 B1**
(45) Veröffentlichungstag und Bekanntmachung des Hinweises auf die Patenterteilung: **29.09.1999**
(21) Anmeldenummer: 98100276.9
(22) Anmeldetag: 09.01.1998
(51) Int. Cl.: F02D 41/02, F01N 7/00, F01N 3/08

(54) **Leckageueberwachung bei einer Abgasbehandlungsanordnung eines Verbrennungsmotors**
Monitoring of leakage in an exhaust gas treatment device of a combustion engine
Surveillance de fuite dans un dispositif de traitement de gaz d'échappement d'un moteur à combustion

(43) Veröffentlichungstag der Anmeldung: 25.08.1999
(73) Patentinhaber: Ford Global Technologies, Inc., A subsidiary of Ford Motor Company, Dearborn, Michigan 48126 (US)
(72) Erfinder: Dickers, Guido, 41068 Moenchengladbach (DE); Himmelsbach, Johann, 51789 Lindlar (DE); Grieser, Klemens, 40764 Langenfeld (DE); Phlips, Patrick, 50858 Koeln (DE)
(74) Vertreter: Messulam, Alec Moses

(56) Entgegenhaltungen:
- EP-A- 0 719 931
- US-A- 5 158 063
- US-A- 5 351 526
- US-A- 5 372 036
- PATENT ABSTRACTS OF JAPAN vol. 007, no. 133 (M-221), 10.Juni 1983 & JP 58 048743 A (TOYOTA JIDOSHA KOGYO KK;OTHERS: 01), 22.März 1983,

## Beschreibung

Die Erfindung betrifft eine Leckageüberwachung bei einem Verbrennungsmotor mit einer Abgasbehandlungsanordnung, einer elektronischen Motorsteuerung mit einer Einrichtung zur Festlegung des dem Verbrennungsmotor zuzuführenden Luft-/Kraftstoffverhältnisses Lambda abhängig von verschiedenen Motorbetriebsparametern, wobei der Einstellbereich für Lambda auch Werte größer als 1,0 umfaßt, einer Einrichtung zur Einstellung des von der Motorsteuerung vorgegebenen Luft-/Kraftstoffverhältnisses sowie einer Einrichtung zur näherungsweisen Bestimmung der Temperatur der Abgasbehandlungsanordnung.

Die Abgasbehandlungsanordnung weist einen konventionellen Dreiwegekatalysator auf. Zusätzlich ist eine Stickoxidfalle (NOₓ-Trap) vorgesehen. Die Stickoxidfalle verringert insbesondere die bei einem kraftstoffsparenden Magerbetrieb des Motors auftretenden Stickoxidemissionen.

Sowohl bei Dreiwegekatalysatoren als auch bei Stickoxidfallen besteht ein bekanntes Problem darin, daß bestimmte, vorgegebene Grenztemperaturen der aktiven Substanzen nicht überschritten werden dürfen, um eine Beschädigung bzw. vorschnelle Alterung zu vermeiden.

Es ist heute vielfach üblich, den Katalysator relativ nahe am Motor anzuordnen, um ein schnelles Aufheizen desselben nach einem Motorkaltstart zu erreichen. Bei dieser Anordnung kann der Katalysator - vor allem bei einem längeren Motorbetrieb im Vollastbereich - Temperaturen erreichen, die im Bereich der Beschädigungsgrenztemperatur liegen.

Es ist bekannt, Maßnahmen zur Senkung der Abgastemperatur (z.B. künstliche Gemischanreicherung) zu treffen, wenn die Beschädigungsgrenztemperatur überschritten zu werden droht.

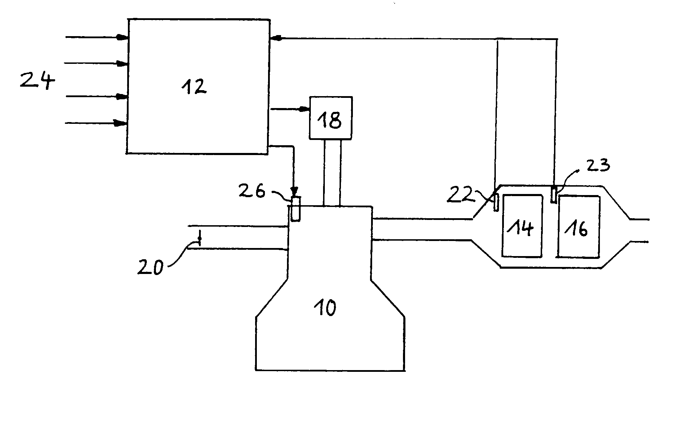

Bei einem Gegenstand nach dem ersten Teil des Anspruchs 1 (vergleiche EP-A- 719 931, Fig. 8 mit Spalten 6 und 8) wird mit zwei Temperatur - Sensoren vor und nach dem Katalysator eine Luft - Leckage im Abgassystem festgestellt, die zu Übertemperatur des Katalysators führen kann.

Bei Leckage wird die Feedbackregelung eingestellt und der Feedbackregel -Faktor auf "1" gesetzt oder es wird Feedbackregelung ein mageres Gemisch eingeregelt.

Es wird jedoch bislang bei der Steuerung des Verbrennungsmotors nicht beachtet, daß der Katalysator dann besonders in Mitleidenschaft gezogen werden kann, wenn zwischen Motor und Katalysator ein Leck auftritt und dadurch vermehrt Sauerstoff in den Katalysator gelangt, der mit unverbrannten Kohlenwasserstoffen oder Kohlenmonoxid zu einer verstärkten Erwärmung des Katalysators und damit zum Überschreiten der Beschädigungsgrenztemperatur führen kann. Dies kann besonders bei angereichertem Gemisch (Lambda kleiner als 1) der Fall sein.

Die Aufgabe der vorliegenden Erfindung liegt darin, ein Verfahren der eingangs genannten Art zu schaffen, mit dem eine Beschädigung bzw. vorschnelle Alterung des Katalysators vermieden werden kann.

Diese Aufgabe wird erfindungsgemäß gelöst mit den Merkmalen nach Anspruch 1.

Es wird somit erfindungsgemäß bei Auftreten eines Lecks und Überschreiten der vorgegebenen Grenztemperatur verhindert, daß der Motor mit einem höheren Kraftstoffanteil, als es einem stöchiometrischen Luft-/Kraftstoffverhältnis entspricht, betrieben (Lambda = 1,0 bei Normierung auf den stöchiometrischen Wert) wird.

Die Einstellung auf stöchiometrisches bzw. leicht mageres Gemisch erfolgt unter Abschaltung der sonst erfolgenden Lambda-Regelung. Dadurch wird vermieden, daß durch die Leckage verfälschte Werte der Lambda-Sonde für die Regelung benützt werden.

Die Überschreitung der Grenztemperatur wird bevorzugt mit zwei Temperaturen am Katalysator (Eingangstemperatur T_{E} und Ausgangstemperatur T_{A} bzw. durch deren Differenz) überwacht.

Die vorgegebene Temperaturdifferenz kann vorzugsweise so gewählt werden, daß diese etwa bei 50 bis 150 °C liegt.

Die Überschreitung der Grenztemperatur kann auch mittels Ausgangstemperatur T_{A} allein überwacht werden. Dabei liegt der Maxim, alwert bei etwa 850-950 °C.

Insbesondere im Vollastbetrieb, in dem ein fetteres Gemisch eingestellt wird, um das angeforderte Drehmoment bereitzustellen, kann die Zufuhr von Falschluft durch ein Leck schnell zur Erhöhung der Katalysatortemperatur führen. Das Rohabgas enthält in dieser Situation auch unverbrannten Kraftstoff.
Der unverbrannte Kraftstoff gelangt in den Katalysator. Dort findet eine Nachverbrennung statt. Da diese Verbrennung zeitlich und örtlich stark begrenzt ist, kann dies zu einer lokalen Überhitzung der aktiven Substanzen führen (sog. hot spots).

Wird die vorgegebene Temperaturdifferenz überschritten, wird erfindungsgemäß auf gesteuertes (Lambda-Regelung abgeschaltet) stöchiometrisches oder leicht mageres Gemisch umgeschaltet.

Die Erfindung wird nachfolgend anhand der Zeichnung beispielhaft näher erläutert.

Der Mehrzylinderverbrennungsmotor 10 wird von einer elektronischen Motorsteuerung 12, die eine Vielzahl von Eingangssignalen 24, wie z.B. die aktuelle Motordrehzahl oder die aktuelle Stellung des Fahrergaspedals erhält, gesteuert. Die Motorsteuerung führt Algorithmen zur Ansteuerung einer elektronischen Drosselklappe 20, einer Zündanlage 18 und einer Einspritzanlage 26 aus. Über die elektronische Drosselklappe 20 und die Einspritzanlage 18 kann das Luft-/Kraftstoffverhältnis Lambda des den Zylindern zugeführten Gemisches in weiten Grenzen verändert werden, insbesondere kann unter bestimmten Betriebsbedingungen ein mageres Luft-/Kraftstoffverhältnis eingestellt werden (z.B. Lambda=1,6) oder die Kraftstoffzufuhr völlig unterbunden werden (Schiebebetrieb). Die Motorabgase werden einer Abgasbehandlungsanordnung 28 zugeführt. Diese kann z.B. aus einem Dreiwegekatalysator 14 und einer Stickoxidfalle 16 bestehen. Durch zwei Temperatursensoren 22, 23 wird die Abgastemperatur vor und nach dem Katalysator 14 gemessen.

## Patentansprüche

1. Leckageüberwachung bei einer Abgasbehandlungsanordnung eines Verbrennungsmotors bei dem das Luft/Kraftstoffverhältnis Lambda am Katalysator gemessen wird und bei dem wenigstens eine Temperatur des Katalysators bestimmt wird, dadurch gekennzeichnet, daß im Falle des Überschreitens wenigstens eines auf die Temperatur des Drei-Wege-Katalysators bezogenen Höchstwertes bei Vollastbetrieb mit leicht fettem Luft/Kraftstoffverhältnis auf gesteuertes stöchiometrisches oder leicht mageres Gemisch umgeschaltet wird.

2. Leckageüberwachung nach Anspruch 1, dadurch gekennzeichnet, daß als auf die Temperatur des Katalysators bezogener Höchstwert eine Ausgangstemperatur am Katalysator benutzt wird.

3. Leckageüberwachung nach einem der vorhergehenden Ansprüche, dadurch gekennzeichnet, daß als auf die Temperatur des Katalysators bezogener Höchstwert eine Differenz von Ein- und Ausgangstemperatur benutzt wird.

4. Leckageüberwachung nach einem der vorhergehenden Ansprüche, dadurch gekennzeichnet, daß die für die Erkennung eines Lecks benötigten Temperaturen aus dem Innenwiderstand von Sensoren zur Bestimmung des Luft/Kraftstoffverhältnisses ermittelt werden.

5. Leckageüberwachung nach einem der vorhergehenden Ansprüche, dadurch gekennzeichnet, daß zusätzlich eine Warnlampe für den Fahrer eingeschaltet wird.

6. Leckageüberwachung nach einem der vorhergehenden Ansprüche, dadurch gekennzeichnet, daß zusätzlich ein Fehlercode in der Motorsteuerung abgespeichert wird.

## Claims

1. Method of monitoring leaks in an exhaust gas treatment system of an internal combustion engine wherein the air/fuel ratio lambda at the catalytic converter is measured and wherein at least one temperature of the catalytic converter is determined, characterised in that in the event of at least one maximum value related to the temperature of the three-way catalytic converter being exceeded at full load operation with a slightly rich air/fuel ratio, it is changed over to a controlled stoichiometric or slightly weak mixture..

2. Leak monitoring method according to claim 1, characterised in that an outlet temperature of the catalytic converter is used as the maximum value related to the temperature of the catalytic converter.

3. Leak monitoring method according to any preceding claim, characterised in that a difference between inlet and outlet temperatures is used as the maximum value related to the temperature of the catalytic converter.

4. Leak monitoring method according to any preceding claim, characterised in that the temperatures required for the detection of a leak are obtained from the internal resistance of sensors for the determination of the air/fuel ratio.

5. Leak monitoring method according to any preceding claim, characterised in that in addition a warning lamp for the driver is switched on.

6. Leak monitoring method according to any preceding claim, characterised in that in addition an error code is stored in the engine control unit.

## Revendications

1. Procédé de surveillance de fuites dans un dispositif de traitement des gaz d'échappement d'un moteur à combustion pour lequel on mesure le rapport air/carburant lambda au catalyseur et on détermine au moins une température du catalyseur, **caractérisé** en ce que, en cas de dépassement d'au moins une valeur maximale concernant la température du catalyseur à trois voies, en fonctionnement à pleine charge avec un rapport air/carburant légèrement gras, on passe à un mélange commandé stoechiométrique ou légèrement maigre.

2. Procédé de surveillance de fuites selon la revendication 1, **caractérisé** en ce que, comme valeur maximale concernant la température du catalyseur, on utilise une température de sortie du catalyseur.

3. Procédé de surveillance de fuites selon une des revendications précédentes, **caractérisé** en ce que, comme valeur maximale concernant la température du catalyseur, on utilise une différence entre la température d'entrée et la température de sortie.

4. Procédé de surveillance de fuites selon une des revendications précédentes, **caractérisé** en ce que les températures nécessaires pour déceler une fuite sont déterminées à partir de la résistance interne de capteurs destinés à déterminer le rapport air/carburant.

5. Procédé de surveillance de fuites selon une des revendications précédentes, **caractérisé** en ce qu'un témoin lumineux pour le conducteur est en outre enclenché.

6. Procédé de surveillance de fuites selon une des revendications précédentes, **caractérisé** en ce qu'un code d'erreur est en outre mémorisé dans la gestion moteur.
